# EUROPÄISCHE PATENTSCHRIFT

(11) **EP 0 440 577 B1**
(45) Veröffentlichungstag und Bekanntmachung des Hinweises auf die Patenterteilung: **05.10.1994**
(21) Anmeldenummer: 91810024.9
(22) Anmeldetag: 15.01.1991
(51) Int. Cl.: G01N 21/45

(54) **Interferometrische Messanordnung**
Interferometric measurement arrangement
Dispositif de mesure interférométrique

(30) Priorität: 22.01.1990 CH 185/90
(43) Veröffentlichungstag der Anmeldung: 07.08.1991
(73) Patentinhaber: CIBA-GEIGY AG, 4002 Basel (CH)
(72) Erfinder: Bruno, Alfredo Emilio, Dr., CH-4104 Oberwil (CH)

(56) Entgegenhaltungen:
- US-A- 3 529 896
- APPLIED OPTICS, Band 11, Nr. 4, April 1972, Seiten 953-954; B.U. ACHIA et al.:"Real-time hologram-Moiré interferometry for liquid flow visualization"
- ANAL. CHEM., Band 58, Nr. 2, Februar 1986, Seiten 504-505, Washington, US; D.J. BORNHOP et al. : "Simple nanoliter refractive index detector"
- APPLIED OPTICS, Band 22, Nr. 22, November 1983, Seiten 3526-3531, New York, US; R.S. KASANA et al. : "Determination of the refractive index of a lens using the Murty shearing interferometer"
- APPLIED OPTICS, Band 16, Nr. 4, April 1977, Seiten 1050-1053; Y. OHTSUKA et al.: "Radial distribution of the refractive index in light-focusing rods : determination using Interphako interference microscopy"
- PATENT ABSTRACTS OF JAPAN, Band 12, Nr. 341 (P-758)[3188], 13. September 1988 ; & JP-A-63 101 733

## Beschreibung

Die Erfindung betrifft eine interfrometrische Messanordnung, vorzugsweise zum Einsatz in der Chromatographie, insbesondere eine Einrichtung zur Detektion von Aenderungen der Brechungsindices in lichtdurchlässigen, vorzugsweise runden Kapillaren mittels interferometrischer Methoden gemäss Oberbegriff des Patentanspruchs 1.

Brechungsindex-Detektoren werden bei der Flüssigkeitschromatographie und insbesondere in HPLC-, SFC-, FIA- und CE-Anwendungen eingesetzt. Die dabei verwendeten Detektoren sind im allgemeinen universell einsetzbar, ausser wenn die zu untersuchende Substanz exakt den gleichen Brechungsindex aufweist wie die Flüssigkeit, in der die Substanz in gelöster Form vorliegt. Diese Lösung wird im allgemeinen als das Medium bzw. als die sogenannte mobile Phase bezeichnet. Der der Erfindung zugrunde liegende Brechungsindexdetektor zur Messung von Brechungsindexänderungen basiert auf der Interferometrie, insbesondere für die Chromatographietechnik unter Verwendung von Kapillaren. Die Kapillare wird als optisches Element benutzt, um das benötigte Interferogramm zu erzeugen. Die wesentlichen Probleme, die bei der Verwendung derartiger Detektoren auftreten, betreffen deren geringe Empfindlichkeit und ihre extreme Temperaturabhängigkeit.

Wenn zwei Lichtstrahlenbündel der gleichen kohärenten Lichtquelle verschiedene optische Wege durchlaufen und dann zusammentreffen, ergeben sich verstärkende und auslöschende Interferenzen. Die optische Durchtrittslänge ist als die physikalische Durchtrittslänge multipliziert mit dem Brechungsindex definiert. Somit kann die Verschiebung des Interferenzmusters zur Messung von Veränderungen des Brechungsindexes im Medium benutzt werden, wenn die physikalische Durchtrittslänge konstant gehalten wird. Im vorliegenden Falle werden die Interferenzen durch seitliche Beleuchtung der Kapillare mit dem kohärenten Licht beispielsweise eines Helium-Neon-Lasers erzeugt. Ein einzelnes Laserstrahlenbündel, das auf eine Kapillare gerichtet wird, wird üblicherweise in einer Ebene senkrecht zur Kapillarachse gestreut. Der Streuwinkel des Lichtintensitätsprofils gemessen zu der Längsachse des Hauptstrahles ist charakteristisch für die Kapillarabmessungen und den Brechungsindex seiner Wände und des darin befindlichen Mediums.
Nach dem Auftreffen auf die Kapillare folgen die Lichtstrahlen unterschiedlichen Wegen, abhängig von dem Winkel, unter dem sie auf die Wand der Kapillare auftreffen und auch abhängig vom Brechungsindex des Mediums. Interferenzmuster erscheinen dann zwischen den abgelenkten Strahlen von unterschiedlichen Paarungen von Strahlenbündeln, die aus der Kapillare in paralleler Form austreten. Das Ergebnis ist eine komplizierte Ueberlagerung von Interferenzstreifenmustern.

In ANAL. CHEM., Band 58, Nr. 2, Februar 1986, Seiten 504-505, ist ein einstrahliger interferometrischer Brechungsindexdetektor der gattungsbildenden Art beschrieben. Der Brechungsindexdetektor zur Erfassung von Brechungsindexänderungen eines durch eine Kapillare strömenden Mediums umfasst eine Kapillare, die von einem zu untersuchenden Medium durchströmt wird, einen Laser, dessen kohärentes Licht von einer Seite auf die Kapillare eingestrahlt wird, und auf der der Lichtquelle (5) gegenüberliegenden Seite der Kapillare eine Photodiode, die um die Kapillare als Achse verschwenkbar ist und mit deren Hilfe ein Interferenzmuster detektierbar ist, welches ein Resultat von Überlagerungen von das Medium und die Kapillare durchtretenden Lichtstrahlenbündeln darstellt. Zur Erhöhung der Empfindlichkeit des Brechungsindexdetektors wird unter anderem vorgeschlagen, die Küvette, durch welche die zu untersuchende Probe geführt ist, zu temperieren. Dazu wird die Küvette mit einem grossen Aluminiumblock in Verbindung gebracht. Eine weitere Massnahme, die Empfindlichkeit des Brechungsindexdetektors zu verbessern, besteht darin, die gesamte Vorrichtung innerhalb eines Gehäuses anzuordnen. Auf diese Weise soll Zugluft vermieden werden, die die Probentemperatur und die Ausbreitungscharakteristik des Lasers beeinflussen könnte. Es sind noch weitere Verbesserungsmassnahmen vorgeschlagen, beispielsweise die Vermeidung von Vibrationen, usf.

Ein wesentliches Problem besteht im Auffinden und Selektieren der auszuwertenden Interferenzstreifen. Dies deshalb, weil sich nicht alle Interferenzstreifen bei einer Aenderung des Brechungsindex des in der Kapillare befindlichen Mediums ändern, wie beispielsweise Interferenzstreifen von Strahlen, die am Kapillarinneren vorbeigehen. Darüber hinaus ist es wegen der Ueberlagerung der verschiedenen Interferenzstreifenmuster sehr schwierig, einen geeigneten Interferenzstreifen herauszufinden (z.B. einen, der ausschliesslich einer Interferenzgruppe angehört), um ein unverzerrtes, deutliches Ausgangssignal zu erhalten.

Aufgabe der vorliegenden Erfindung ist es daher, eine Einrichtung der eingangs erwähnten Art zu schaffen, mit der sich ein Interferenzstreifenmuster erzielen lässt, das wesentlich einfacher auswertbar ist. Ausserdem soll die Temperaturstabilität des Brechungsindex-Detektors erhöht sein.

Die Lösung dieser Aufgabe erfolgt durch eine Vorrichtung gemäss des Patentanspruchs 1. Insbesondere wird vorgeschlagen, dass die Kapillare mit einem lichtdurchlässigen Material umgeben wird, welches einen Brechungsindex aufweist, der innerhalb einer Abweichungsgrenze von etwa ± 25 % mit dem Brechungsindex der Kapillarwand übereinstimmt. Dieses Material ist vorzugsweise eine Anpassflüssigkeit bzw. ein sogenanntes "Matching fluid". Selbstverständlich kann das lichtdurchlässige Material auch eine feste Materialschicht sein. Dadurch werden Reflexionen an der Aussenwand der Kapillare vermieden. In der Praxis bedeutet dies, dass das resultierende Interferenzstreifenmuster nur noch vom Brechungsindex des im Kapillarröhrchen befindlichen Mediums abhängig ist. Dadurch wird sowohl das Interferenzstreifenmuster vereinfacht (weniger Ueberlagerungen) als auch die Voraussetzung für eine möglichst einfache Auswahl des geeigneten Interferenzstreifens geschaffen. Die Kapillare lässt sich beispielsweise auf einfache Weise in diese transparente Anpassflüssigkeit eintauchen. Dabei ist etwa durch Titration ein einfaches Einstellen des Brechungsindexes der Anpassflüssigkeit möglich. Vorteilhaft ist weiterhin, dass durch diese Anpassflüssigkeit die üblichen runden Kapillaren verwendet werden können. Man könnte zwar auch Kapillaren mit einer planen Aussenwand und einer gekrümmten Innenfläche verwenden, dies würde jedoch spezielle Kapillaren erfordern, die zum heutigen Zeitpunkt kaum herstellbar sind, und wenn doch, dann nur unter einem nicht vertretbaren Mehraufwand.

Insbesondere bei Verwendung einer die Kapillare umgebenden Anpassflüssigkeit ergibt sich zudem die Möglichkeit einer einfachen und genauen Temperierung der Kapillare und des Mediums. Zweckmässigerweise ist die Temperiervorrichtung als Wärmetauscher ausgebildet, der in die Anpassflüssigkeit eintaucht; vorzugsweise ist der Wärmetauscher ein Peltier-Element. Die Anpassflüssigkeit bildet hierbei gleichzeitig ein Temperierbad für die Kapillare, so dass die Stabilität der Temperatur wesentlich erhöht ist.

Zusätzliche Ausgestaltungen der Erfindung sind in den weiteren abhängigen Ansprüchen aufgeführt. Nachstehend ist die Erfindung mit ihren wesentlichen Einzelheiten anhand der Zeichnungen näher erläutert. Es zeigen:
- Fig. 1: eine schematische Darstellung einer Messeinrichtung,
- Fig. 2: einen Schnitt durch eine mit 4 bezeichneten Detektionszelle nach Linie II-II in Fig. 3,
- Fig. 3: eine Ansicht der Detektionszelle gemäss Pfeil III in Fig. 2,
- Fig. 4: ein schematischer Querschnitt durch eine Kapillare und die sie umgebende Anpassflüssigkeit und
- Fig. 5 und 6: Beispiele von Interferogrammen.

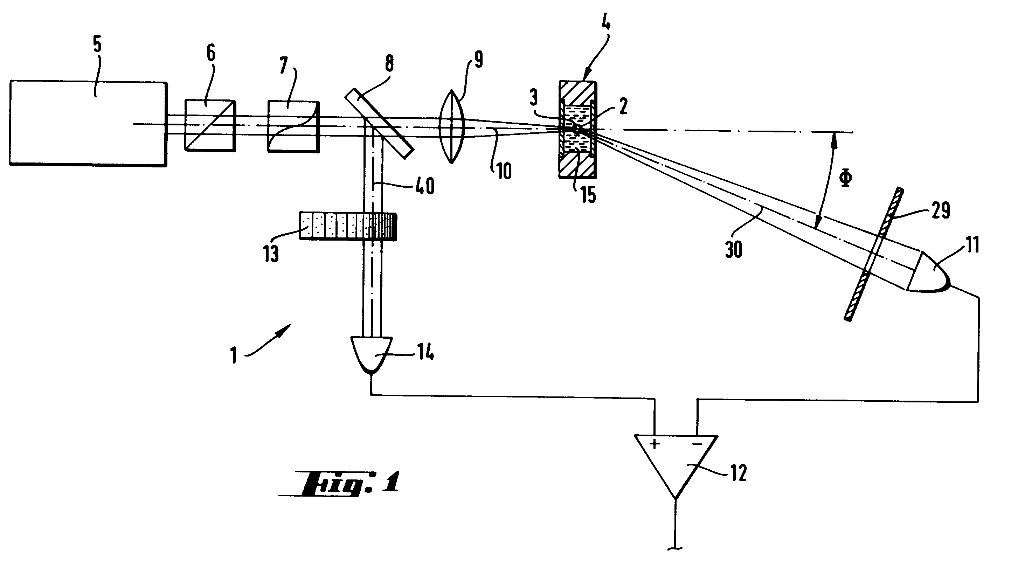

Mit Hilfe der in Fig. 1 gezeigten Messanordnung 1 lässt sich die Brechungsindexänderung eines in einer Kapillare befindlichen Medium 3 bestimmen. Die Kapillare 2 ist innerhalb einer Brechungsindexdetektionszelle 4 angeordnet. Als kohärente Lichtquelle dient ein Helium-Neon-Laser 5. Im Strahlengang sind nacheinander ein Polarisator 6, ein λ/4-Plättchen 7 sowie ein Strahlteiler 8 und ein Mikroskopobjektiv 9 angeordnet. Der Hauptteil 10 des kohärenten Lichts durchtritt den Strahlteiler 8 und gelangt über das Mikroskopobjektiv 9 zu der Detektionszelle 4. In Abhängigkeit von dem in der Kapillare 2 befindlichen Medium ergibt sich ein bestimmtes Interferenzstreifenmuster.

Mit Hilfe eines vorzugsweise um die Kapillare 2 als Achse verschwenkbaren Detektors, vorzugsweise einer Photodiode 11, wird ein Interferenzstreifen 30 aus dem Interferenzstreifenmuster ausgewählt. Eine Spaltblende 29 begrenzt die räumliche Ausdehnung des Interferenzstreifens 30, so dass nur ein Teil des Lichtes des selektierten Interferenzstreifens 30 auf die Photodiode 11 auftrifft. Der zweite Teil 40 des kohärenten Lichts, der im Strahlteiler 8 abgespaltet wird, dient als Referenzstrahl 40. Der Referenzstrahl 40 wird mit Hilfe eines Graukeils 13 homogenisiert und auf eine Referenz-Photodiode 14 geleitet. Das vom Interferenzstreifen 30 in der Photodiode 11 hervorgerufene Signal und das vom Referenzstrahl 40 in der Referenz-Photodiode 14 erzeugte Signal werden einem Differenzverstärker 12 zugeführt und miteinander verglichen. Soweit entspricht die Messanordnung handelsüblichen Einrichtungen, beispielsweise der in einem Artikel von D.J. Bomhop & N.J. Dovichi in Anal. Chem., 1986, 58, Seite 504 beschriebenen.

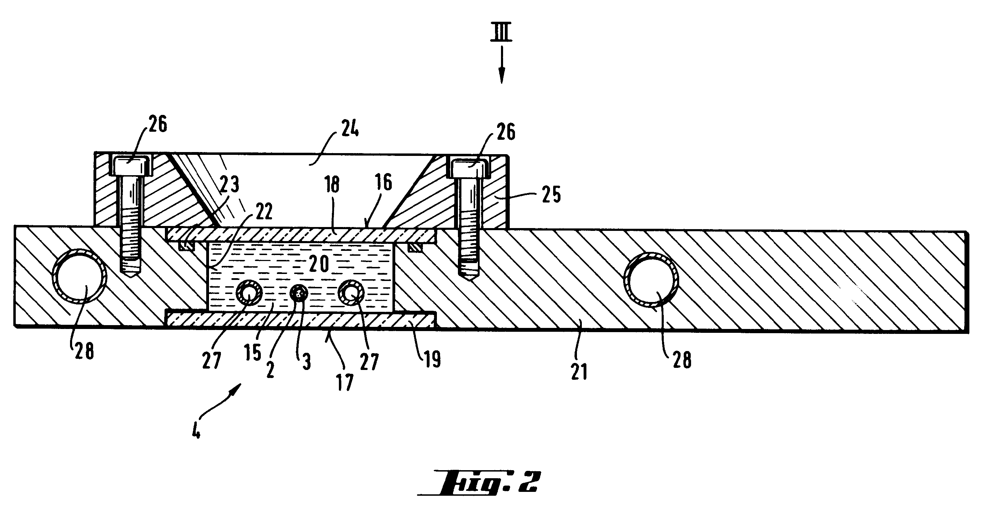

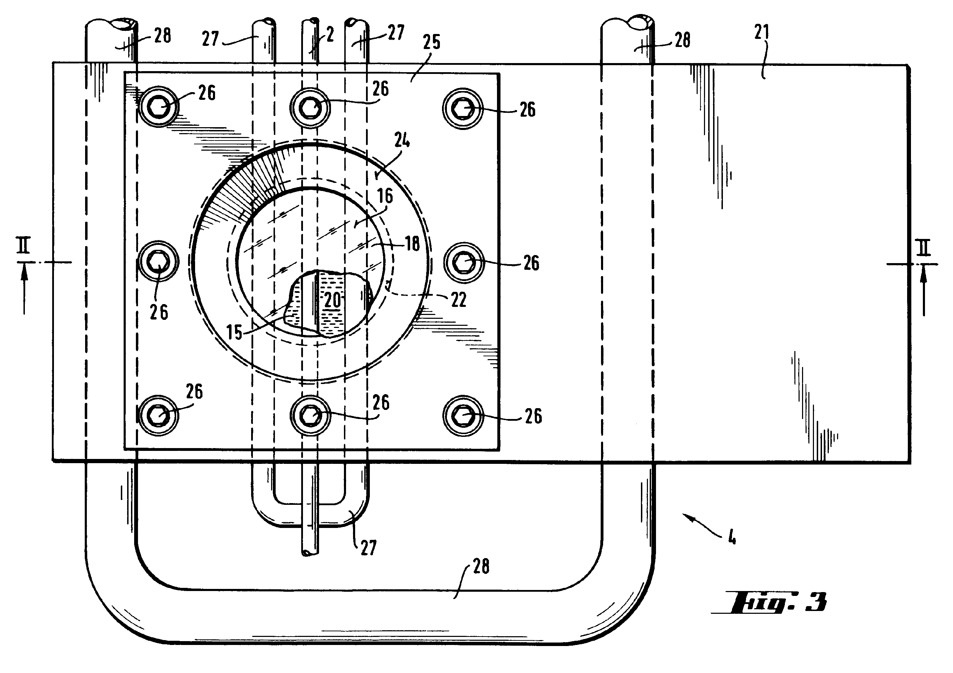

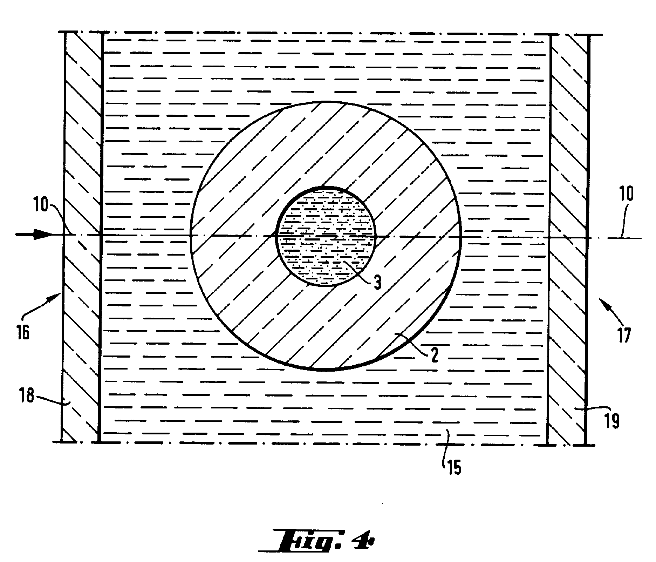

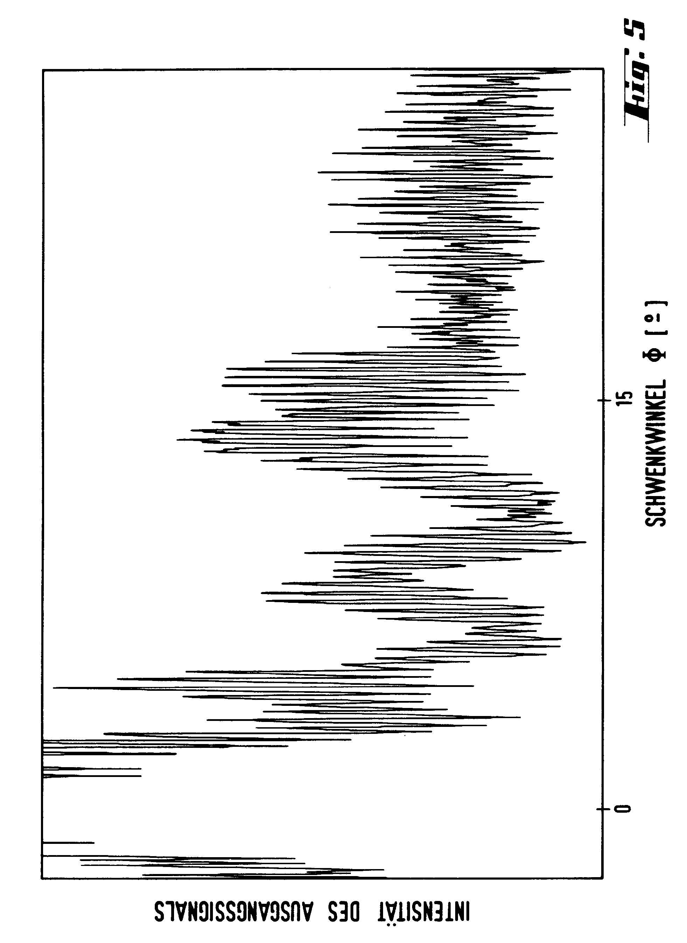

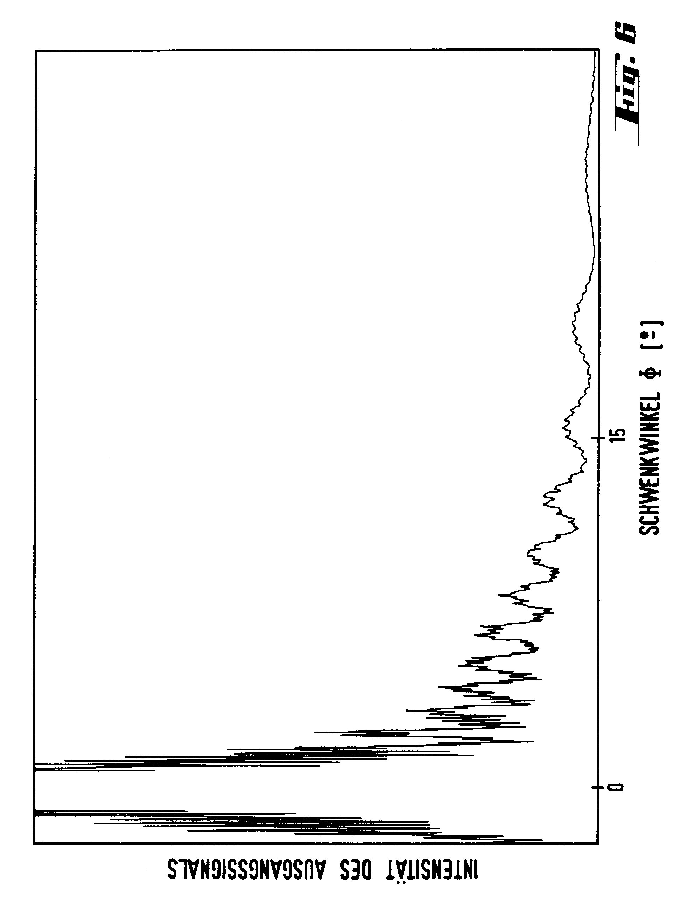

Zur Erfassung eines grösseren Bereiches des entstehenden Interferenzstreifenmusters werden die Spaltblende 29 und die Photodiode 11 um die Kapillarachse geschwenkt und das Ausgangssignal des Differenzverstärkers 12 in Abhängigkeit des Schwenkwinkels ⌀ aufzeichnet (Fig. 5 und 6).

Zur Vereinfachung des sich bildenden Interferenzstreifenmusters ist die Kapillare 2 erfindungsgemäss von einem lichtdurchlässigen Material umgeben, welches den gleichen Brechungsindex aufweist wie die Wand der Kapillare 2. Gemäss dem in den Fig. 1-4 dargestellten Ausführungsbeispiel ist die Kapillare 2 in einer Anpassflüssigkeit 15 angeordnet, deren Brechungsindex mit dem des Kapillarenmaterials (üblicherweise Fused Silica) innerhalb einer Abweichungsgrenze von etwa ± 25 % übereinstimmt. Dadurch werden Reflexionen und Brechungen an der Aussenseite der Kapillare 2 weitgehend vermieden. Dementsprechend reduzieren sich auch die auftretenden Ueberlagerungen, so dass ein für die Auswertung wesentlich vereinfachtes Interferenzmuster zur Verfügung steht. Vorzugsweise stimmen die Brechungsindices des Kapillarenmaterials und der Anpassflüssigkeit etwa überein. Dann werden Reflexionen und Brechungen an der Kapillarenaussenseite gänzlich vermieden und Ueberlagerungen vollständig unterdrückt.

In den Fig. 5 und 6 sind registrierte Interferenzmuster in Abhängigkeit des Schwenkwinkels ⌀ der Photodiode 11 dargestellt. Dabei zeigt Fig. 5 eine beispielsweise Messung ohne Anpassflüssigkeit 15 während Fig. 6 Messergebnisse mit Anpassflüssigkeit 15 darstellt. Es ist klar ersichtlich, dass das Umgeben der Kapillare mit einer Anpass-Materialschicht, vorzugsweise der Anpassflüssigkeit 15, zu einer wesentlichen Vereinfachung des Interferenzstreifenmusters bzw. der registrierten Ausgangssignale der Photodiode 11 führt.

Fig. 4 zeigt schematisch einen Querschnitt durch die Kapillare 2 und die sie umgebende Anpassflüssigkeit 15. Die Licht-Eintrittsseite 16 und die Licht-Austrittsseite 17 stellen vorzugsweise planparallele Flächen dar. Der Lichtstrahl ist durch seine Hauptstrahlenachse 10 angedeutet. Wie bereits erwähnt, ist die Anpassflüssigkeit 15 hinsichtlich ihres Brechungsindexes innerhalb der Abweichungsgrenzen von ± 25 % auf den des Kapillarenmateriales abgestimmt. Der Brechungsindex der verwendeten Anpassflüssigkeit kann beispielsweise durch Titration angepasst werden. Dazu kann eine transparente, organische Lösung mit einem Brechungsindex, der etwas unterhalb von dem des Kapillarenmaterials liegt, durch Titration mit einer anderen Lösung, die einen Brechungsindex etwas über dem des Kapillarenmateials hat, so lange verändert werden, bis beim Eintauchen eines Teiles der Kapillare in die titrierte Lösung die Kapillare nicht mehr erkennbar ist.

In Fig. 2 und Fig. 3 ist der Aufbau einer Detektionszelle 4 dargestellt. Die Anpassflüssigkeit 15 und die Kapillare 2 befinden sich dabei in einer durch planparallele, gegenüberliegende Glasscheiben 18, 19 abgegrenzten Kammer 20. Als Gehäuse dient ein Metallblock 21, der vorzugsweise aus Aluminium besteht. Dieser plattenförmige Metallblock hat zur Bildung der Kammer 20 eine Durchgangsöffnung 22. Die eine Seite dieser Durchgangsöffnung 22 ist durch die fest und dicht mit dem Gehäuse verbundene Glasscheibe 19 gebildet. Die Glasscheibe ist vorzugsweise eingeklebt. Die gegenüberliegende Seite der Durchgangsöffnung 22 ist durch die andere, lösbar angeordnete Glasscheibe 18 gebildet, die mit einer Flachseite an einem durch einen O-Ring gebildeten Dichtungsring 23 anliegt. Die andere Flachseite dieser Glasscheibe 18 ist durch eine ein Durchtrittsfenster 24 freilassende Halteplatte 25 druckbeaufschlagt. Die Halteplatte ist mittels Schrauben 26 mit dem Metallblock 21 verbunden.

Um die Temperaturstabilität zu erhöhen, ist das Kapillare temperiert. In besonders vorteilhafter Weise wird dazu die Anpassflüssigkeit 15 gleichzeitig auch als Temperierbad verwendet. Zur Regulierung der Temperatur dient ein Wärmeaustauscher 27, der in die Anpassflüssigkeit 15 eintaucht. Auch der Metallblock 21 ist temperiert, wozu gemäss dem dargestellten Ausführungsbeispiel ein Flüssigkeit führendes Röhrchen 28 vorgesehen ist. Vorteilhaft ist hierbei auch, dass durch die vergleichsweise grosse Masse des Metallblockes und durch Verwendung eines gut wärmeleitenden Materiales eine Pufferung von Wärmeschwankungen auftritt. Der Wärmeaustauscher 27 und das Röhrchen 28 sind mit externen Temperierbädern verbunden. In einer besonders bevorzugten Art der Temperierung kann z.B. auch eine elektrische Temperaturregelung über ein oder mehrere Peltier-Elemente vorgesehen sein. Durch die vorgesehenen Temperiermassnahmen kann eine Temperaturstabilität bis zu 2,5x10² K erreicht werden. Die Temperierung der Kapillare 2 über die Anpassflüssigkeit 15 bietet insbesondere den grossen Vorteil, dass sie direkt im optisch relevanten Teil der Messvorrichtung erfolgt, und nicht wie bei den bislang bekannten Vorrichtungen vor bzw. hinter der eigentlichen Messregion angeordnet ist.

Die anhand des Spezialfalls der Brechungsindexänderungsmessung beschriebene erfindungsgemässe interferometrische Messanordnung kann aber auch für Messungen im Ultraviolettbereich oder im Infrarotbereich verwendet werden. Auch eignet sie sich gut für Fluoreszenzanwendungen, insbesondere für Messungen von laserinduzierter Fluoreszenz. Die Auswahl der Anpass-Materialschicht richtet sich auch nach der Art der verwendeten Strahlung und der Transparenz des Materials für diese Strahlung.
Die üblicherweise verwendete Strahlung liegt im Wellenlängenbereich von etwa 150 nm bis zu etwa 5000 nm. Allein schon aus dieser Anwendbarkeit in einem sehr grossen Bereich des elektromagnetischen Spektrums ist die universelle Einsetzbarkeit der erfindungsgemässen interferometrischen Messanordnung ersichtlich.

Insgesamt ist durch die Verwendung einer Anpass-Materialschicht, deren Brechungsindex innerhalb einer Abweichungsgrenze von ± 25 % vom Brechungsindex des Kapillarmaterials liegt, auf einfache Weise eine deutliche Reduzierung und sogar Vermeidung von störenden Reflexionen und Brechungen des Messlichtes an der Kapillarenaussenseite möglich. Durch Wahl einer Materialschicht mit einem Wärmeleitungskoeffizienten, der zumindest geringfügig grösser ist als der des Umgebungsmediums (üblicherweise Luft), kann die Temperaturstabilität der Messanordnung überdies noch deutlich gesteigert werden.

## Patentansprüche

1. Einstrahliger interferometrischer Brechungsindexdetektor zur Erfassung von Brechungsindexänderungen eines durch eine Kapillare strömenden Mediums, umfassend eine Kapillare (2), die von einem zu untersuchenden Medium (3) durchströmt wird, eine Kohärente Lichtquelle (5), die Licht von einer Seite auf die Kapillare (2) einstrahlt, und auf der der Lichtquelle (5) gegenüberliegenden Seite der Kapillare (2) eine Photodiode (11), die um die Kapillare (2) als Achse verschwenkbar ist und mit deren Hilfe ein Interferenzmuster detektierbar ist, welches ein Resultat von Überlagerungen von das Medium (3) und die Kapillare (2) durchtretenden Lichtstrahlenbündeln darstellt, dadurch gekennzeichnet, dass zumindest strahleneintrittsseitig die Kapillare (2) von einer für die verwendete Strahlung durchlässigen Materialschicht umgeben ist, welche einen Brechungsindex aufweist, der innerhalb einer Abweichungsgrenze von etwa ± 25% mit dem des Kapillarenmaterials übereinstimmt, um auf diese Weise ein Interferenzmuster zu erzeugen, welches im wesentlichen frei von Überlagerungen durch an der Aussenfläche der Kapillare reflektierten und gebeugten Lichtstrahlenbündeln ist.

2. Vorrichtung nach Anspruch 1, dadurch gekennzeichnet, dass die Materialschicht durch eine die Kapillare (2) lichteintritts- und lichtaustrittsseitig umgebende Anpassflüssigkeit (matching fluid) (15) gebildet ist.

3. Vorrichtung nach Anspruch 1 oder 2, dadurch gekennzeichnet, dass sowohl die Lichteintritts- als auch die Lichtaustrittsflächen (16,17) der Materialschicht plan und vorzugsweise parallel zueinander angeordnet sind.

4. Vorrichtung nach einem der Ansprüche 1 bis 3, dadurch gekennzeichnet, dass die Anpassflüssigkeit (15) und die Kapillare (2) in einer durch (plan-)parallele, gegenüberliegende Glasscheiben (18,19) abgegrenzten Kammer (20) angeordnet sind.

5. Vorrichtung nach einem der Ansprüche 1 bis 4, dadurch gekennzeichnet, dass eine Temperiervorrichtung zum insbesondere thermostatischen Temperieren der Kapillare (2) vorgesehen ist.

6. Vorrichtung nach Anspruch 5, dadurch gekennzeichnet, dass die Temperiervorrichtung ein Temperiermedium führendes, die Anpassflüssigkeit (15) durchsetzendes Röhrchen (27) oder dergleichen Wärmetauscher aufweist.

7. Vorrichtung nach Anspruch 6, dadurch gekennzeichnet, dass die Temperiervorrichtung eine elektrische Temperaturregelung, vorzugsweise über ein Peltier-Element aufweist.

8. Vorrichtung nach einem der Ansprüche 4 bis 7, dadurch gekennzeichnet, dass sich die Kammer (20) in einem vorzugsweise temperierten Metallblock (21) vorzugsweise aus Aluminium, befindet.

9. Vorrichtung nach Anspruch 8, dadurch gekennzeichnet, dass der Metallblock (21) ein oder mehrere Röhrchen (28) aufweist, welche mit einem externen Temperaturbad verbunden sind und zur Aufnahme einer temperierten Flüssigkeit ausgebildet sind.

10. Vorrichtung nach einem der Ansprüche 4 bis 9, dadurch gekennzeichnet, dass eine der beiden die Kammern abgrenzende Glasscheiben (19) fest und die andere Glasscheibe (18) lösbar mit dem Metallblock (21) oder dergleichen Gehäuse verbunden sind.

11. Vorrichtung nach Anspruch 10, dadurch gekennzeichnet, dass die feste Glasscheibe (19) mit dem Gehäuse (21) dicht verkittet oder dergleichen verbunden ist und dass die andere, lösbare Glasscheibe (18) mit einer Flachseite an einem Dichtring (23), insbesondere einem O-Ring anliegt und von ihrer anderen Flachseite durch eine mit dem Gehäuse (21) verbindbare, insbesondere verschraubbare, ein Durchtrittsfenster (24) freilassende Halteplatte (25) druckbeaufschlagt ist.

12. Vorrichtung nach einem der vorangehenden Ansprüche, dadurch gekennzeichnet, dass die verwendete Strahlung eine Wellenlänge von etwa 150 nm bis zu etwa 5000 nm besitzt.

13. Vorrichtung nach einem der vorangehenden Ansprüche, dadurch gekennzeichnet, dass der Brechungsindex der Materialschicht mit dem des Kapillarenmaterials übereinstimmt.

14. Vorrichtung nach einem der vorangehenden Ansprüche, dadurch gekennzeichnet, dass die Materialschicht einen Wärmeleitungskoeffizienten aufweist, der grösser ist als der von Luft.

## Claims

1. A single-beam interferometric refractive index detector for detecting refractive index changes of a medium flowing through a capillary, comprising a capillary (2) through which streams a medium (3) to be investigated, a coherent light source (5) that shines light onto the capillary (2) from one side, and, on the side of the capillary (2) opposite the light source (5), a photodiode (11) that is pivotable about the capillary (2) as axis and by means of which an interference pattern can be detected, which pattern is a result of superimpositions of beams of light passing through the medium (3) and the capillary (2), wherein, at least on the radiation-inlet side, the capillary (2) is surrounded by a layer of material that is permeable to the radiation used and that has a refractive index that, within a tolerance limit of approximately ± 25 %, corresponds to that of the material of the capillary in order thus to produce an interference pattern that is substantially free of superimpositions by beams of light reflected and diffracted at the outer face of the capillary.

2. An apparatus according to claim 1, wherein the layer of material is a matching fluid (15) which surrounds the capillary (2) on the light-inlet side and on the light-outlet side.

3. An apparatus according to claim 1 or claim 2, wherein the light-inlet and the light-outlet faces (16, 17) of the layer of material are both planar and are arranged preferably parallel to one another.

4. An apparatus according to any one of claims 1 to 3, wherein the matching fluid (15) and the capillary (2) are arranged in a chamber (20) delimited by (plane-)parallel glass plates (18, 19) arranged opposite one another.

5. An apparatus according to any one of claims 1 to 4, wherein a temperature-control apparatus is provided for, especially thermostatic, temperature-control of the capillary (2).

6. An apparatus according to claim 5, wherein the temperature-control apparatus has a tube (27) that carries temperature-control medium and passes through the matching fluid (15), or has some such heat-exchanger.

7. An apparatus according to claim 6, wherein the temperature-control apparatus has electrical temperature regulation, preferably by means of a Peltier element.

8. An apparatus according to any one of claims 4 to 7, wherein the chamber (20) is arranged in a preferably temperature-controlled metal block (21) consisting preferably of aluminium.

9. An apparatus according to claim 8, wherein the metal block (21) has one or more tubes (28) that are connected to an external temperature-control bath and are constructed to accommodate a temperature-controlled fluid.

10. An apparatus according to any one of claims 4 to 9, wherein one of the two glass plates (19) delimiting the chamber is connected fixedly and the other glass plate (18) is connected releasably to the metal block (21) or the like housing.

11. An apparatus according to claim 10, wherein the fixed glass plate (19) is sealingly cemented or connected in suchlike manner to the housing (21), and the other, releasable glass plate (18) rests with one flat side on a sealing ring (23), especially an O-ring, and pressure is applied to it via its other flat side by a holding plate (25) that can be connected, especially screwed, to the housing (21) and that leaves open a passage window (24).

12. An apparatus according to any one of the preceding claims, wherein the radiation used has a wavelength of from approximately 150 nm to approximately 5000 nm.

13. An apparatus according to any one of the preceding claims, wherein the refractive index of the layer of material corresponds to that of the material of the capillary.

14. An apparatus according to any one of the preceding claims, wherein the layer of material has a thermal-conduction coefficient that is greater than that of air.

## Revendications

1. Détecteur d'indice de réfraction interférométrique, à rayon unique, pour détecter les variations de l'indice de réfraction d'un milieu s'écoulant à travers un capillaire, comprenant un capillaire (2) parcouru par le milieu (3) à étudier, une source (5) de lumière cohérente, qui rayonne de la lumière sur le capillaire (2) depuis un côté, ainsi que, sur le côté du capillaire (2) opposé à la source de lumière (5), une photodiode (11) qui est pivotante autour du capillaire (2) comme axe et à l'aide de laquelle peut être détectée une figure d'interférence qui est un résultat de superpositions de faisceaux de rayons lumineux traversant le milieu (3) et le capillaire (2), détecteur caractérisé en ce que, tout au moins du côté de l'entrée des rayons, le capillaire (2) est entouré d'une couche de matériau transparent pour le rayonnement utilisé, matériau qui présente un indice de réfraction qui concorde, dans des limites de déviation d'environ ± 25 %, avec celui du matériau du capillaire, afin de produire de cette manière une figure d'interférence qui est essentiellement exempte de superpositions dues à des faisceaux de rayons lumineux réfléchis et diffractés sur la surface extérieure du capillaire.

2. Dispositif selon la revendication 1, caractérisé en ce que la couche de matériau est formée par un liquide d'adaptation ("matching fluid") (15) entourant le capillaire (2) du côté entrée de la lumière et du côté sortie de la lumière.

3. Dispositif selon la revendication 1 ou 2, caractérisé en ce que les faces d'entrée et de sortie de la lumière (16, 17) de la couche de matériau sont planes et de préférence parallèles entre elles.

4. Dispositif selon une des revendications 1 à 3, caractérisé en ce que le liquide d'adaptation (15) et le capillaire (2) sont disposés dans une chambre (20) délimitée par des lames de verre (18, 19) situées l'une en face de l'autre et qui sont (planes et) parallèles.

5. Dispositif selon une des revendications 1 à 4, caractérisé en ce qu'il comprend un dispositif d'équilibrage de la température, en particulier pour l'équilibrage par voie thermostatique de la température du capillaire (2).

6. Dispositif selon la revendication 5, caractérisé en ce que le dispositif d'équilibrage comporte un petit tube (27) ou un échangeur de chaleur semblable dans lequel circule un milieu d'équilibrage de la température et qui traverse le liquide d'adaptation (15).

7. Dispositif selon la revendication 6, caractérisé en ce que le dispositif d'équilibrage de la température comporte une régulation électrique de la température, utilisant de préférence un élément Peltier.

8. Dispositif selon une des revendications 4 à 7, caractérisé en ce que la chambre (20) est située dans un bloc de métal (21), de préférence en aluminium, qui est de préférence équilibré en température.

9. Dispositif selon la revendication 8, caractérisé en ce que le bloc de métal (21) contient un ou plusieurs petits tubes (28) raccordés à un bain externe d'équilibrage de la température et conçus pour recevoir un liquide équilibré en température.

10. Dispositif selon une des revendications 4 à 9, caractérisé en ce que l'une (19) des lames de verre délimitant la chambre est reliée de façon fixe et l'autre lame de verre (18) est reliée de façon amovible au bloc de métal (21) ou à un boîtier ou corps semblable.

11. Dispositif selon la revendication 10, caractérisé en ce que la lame de verre (19) fixe est reliée au corps (21) de manière étanche au moyen d'un ciment ou analogue et que l'autre lame de verre (18), amovible, s'applique par une face contre un anneau d'étanchéité (23), en particulier un joint torique, et est soumise, par son autre face, à la pression d'une plaque de maintien (25) qui peut être reliée au corps (21), notamment par des vis, et qui laisse libre une fenêtre de passage (24).

12. Dispositif selon une des revendications précédentes, caractérisé en ce que le rayonnement employé possède une longueur d'onde d'environ 150 nm jusqu'à environ 5000 nm.

13. Dispositif selon une des revendications précédentes, caractérisé en ce que l'indice de réfraction de la couche de matériau concorde avec celui du matériau du capillaire.

14. Dispositif selon une des revendications précédentes, caractérisé en ce que la couche de matériau présente un coefficient de conductibilité thermique supérieur à celui de l'air.
